# FASCICULE DE BREVET EUROPEEN

(11) **EP 2 505 426 B1**
(45) Date de publication et mention de la délivrance du brevet: **26.02.2014**
(21) Numéro de dépôt: 12161880.5
(22) Date de dépôt: 28.03.2012
(51) Int. Cl.: B60N 2/36

(54) **Système de mise en plancher plat de véhicule automobile**
Klappvorrichtung für Fahrzeugsitze
Tilting device for a vehicle seat

(30) Priorité: 30.03.2011 FR 1152659
(43) Date de publication de la demande: 03.10.2012
(73) Titulaire: CENTRE D'ETUDE ET DE RECHERCHE POUR L'AUTOMOBILE (CERA), 51100 Reims (FR); Renault, 92100 Boulogne Billancourt (FR)
(72) Inventeur: Georges, Laurent, 08190 Roizy (FR); Brice, Patrick, 54110 Hudiviller (FR); Masson, Xavier, 78310 Maurepas (FR); Aoudia, Said, 92310 Sèvres (FR)
(74) Mandataire: Sayettat, Julien Christian

(56) Documents cités:
- DE-A1-102004 019 894
- FR-A1- 2 936 452
- FR-A3- 2 946 594
- US-B1- 6 540 295
- US-B1- 6 598 926

## Description

L'invention concerne un système de mise en plancher plat de véhicule automobile.

Il est connu de réaliser un système de mise en plancher plat de véhicule automobile, ledit véhicule comprenant un siège pourvu d'un dossier rabattable horizontalement contre l'assise dudit siège, ledit système comprenant:
- une plaque de recouvrement fixée en envers dudit dossier,
- un volet articulé selon un axe transversal en bordure supérieure de ladite plaque, ledit volet étant actionnable entre une position escamotée, où il est plaqué contre ladite plaque, et une position déployée, où il prolonge ladite plaque au delà de ladite bordure, de manière à former lorsque ledit dossier est rabattu un plancher plan étendu formé par ledit volet et ladite plaque,
- un moyen de blocage dudit volet en position escamotée,
- un moyen ressort de déploiement dudit volet en position déployée lorsque ledit moyen de blocage est désactivé.

L'intérêt d'un tel système est de permettre de réaliser un plancher de chargement plan lorsque le dossier d'un siège arrière est rabattu, ledit plancher étant formé par la plaque et le volet, ledit volet étant mis en position déployée pour bénéficier d'un plancher s'étendant notamment jusqu'au siège avant correspondant.

Lorsque le dossier est relevé en configuration d'utilisation, le volet est rabattu par l'utilisateur contre la plaque, et maintenu contre elle par le moyen de blocage, ceci afin de ne pas gêner la vision vers l'arrière, notamment par le conducteur du véhicule.

Les moyens ressort mis en oeuvre dans les réalisations connues sont notamment de type ressort à spirales.

Ce type de ressort présente l'inconvénient de présenter, pour pouvoir remplir la fonction attendue, un diamètre relativement important, ce qui peut conduire à des réalisations où le ressort est saillant de la face supérieure du plancher étendu, ce qui est antinomique avec la fonction attendue de plancher plat, facilitant le chargement des bagages.

Pour éviter que le ressort ne soit saillant de la face supérieure du plancher étendu, on peut prévoir un plancher d'épaisseur accrue, mais il en résulte une diminution de l'espace de chargement disponible.

D'autre part, l'utilisation d'un tel ressort à spirales oblige à prévoir une charnière spécifique entre la plaque et le volet.

Par ailleurs, les réalisations connues ne présentent pas une esthétique optimale, ceci dans la mesure où la zone d'articulation entre la plaque et le volet est généralement très marquée, présentant généralement un interstice entre les deux qui laisse en outre apparaître le ressort.

Enfin, l'utilisateur est généralement obligé de désactiver manuellement le moyen de blocage pour permettre au volet, sous l'action du ressort, de se mettre en position déployée. Et réciproquement, il peut être amené à activer manuellement le moyen de blocage pour bloquer le volet une fois mis en position escamotée.

L'invention a pour but de pallier, en tout ou partie, ces inconvénients.

A cet effet, l'invention propose un système de mise en plancher plat de véhicule automobile, ledit véhicule comprenant un siège pourvu d'un dossier rabattable horizontalement contre l'assise dudit siège, ledit système comprenant:
- une plaque de recouvrement fixée en envers dudit dossier,
- un volet articulé selon un axe transversal en bordure supérieure de ladite plaque, ledit volet étant actionnable entre une position escamotée, où il est plaqué contre ladite plaque, et une position déployée, où il prolonge ladite plaque au delà de ladite bordure, de manière à former lorsque ledit dossier est rabattu un plancher plan étendu formé par ledit volet et ladite plaque,

- un moyen de blocage dudit volet en position escamotée,
- un moyen ressort de déploiement dudit volet en position déployée lorsque ledit moyen de blocage est désactivé, caractérisé en ce que
   ledit moyen ressort est sous forme d'au moins une lame métallique élastiquement repliable formant charnière entre ladite plaque et ledit volet.

Des caractéristiques additionelles de l'invention sont divulguées dans les revendications dépendantes.

Dans cette description, les termes de positionnement dans l'espace (supérieur, transversal, latéral, avant, arrière, horizontal, vertical, longitudinal...) sont pris en référence au système disposé dans le véhicule, le dossier du siège étant en configuration d'utilisation.

La lame métallique présente une configuration plane lorsque le volet est en position déployée et une configuration repliée d'un demi-tour lorsque ledit volet est en position escamotée.

Avec l'agencement proposé, mettant en oeuvre au moins une telle lame métallique présentant par nature une très fine épaisseur, notamment de l'ordre de 0,1 mm, on obtient un plancher dans lequel le moyen ressort ne crée pas de saillie perceptible par rapport à la face supérieure du plancher.

En outre, l'utilisation d'une lame permet de s'affranchir d'une charnière spécifique ajoutée entre la plaque et le volet, le moyen ressort faisant ici office de charnière.

Par ailleurs, on peut prévoir d'utiliser une plaque et un volet de fine épaisseur, ceci permettant de gagner en espace de chargement.

Selon une caractéristique additionnelle, l'invention propose que le volet et la plaque comprennent chacun une âme rigide reliées entre elles par au moins une lame en ménageant un espace de pliage, ledit espace étant rempli par un bloc de matériau élastiquement compressible, deux couches de matériau de revêtement étant disposées de part et d'autre dudit bloc.

Avec un tel agencement, la zone d'articulation entre la plaque et le volet est invisible lorsque le volet est en position déployée et présente une continuité avec ladite plaque et ledit volet lorsque ce dernier est en en position escamotée.

Selon une caractéristique additionelle, l'invention propose que le système comprenne en outre un moyen de désactivation du moyen de blocage, ledit moyen de désactivation étant agencé pour être activé par rabattement du dossier.

De la sorte, le simple fait de rabattre le dossier entraîne un déblocage du volet qui est actionné par la lame vers sa position déployée.

D'autres particularités et avantages de l'invention apparaîtront dans la description qui suit, faite en référence aux figures jointes, dans lesquelles :

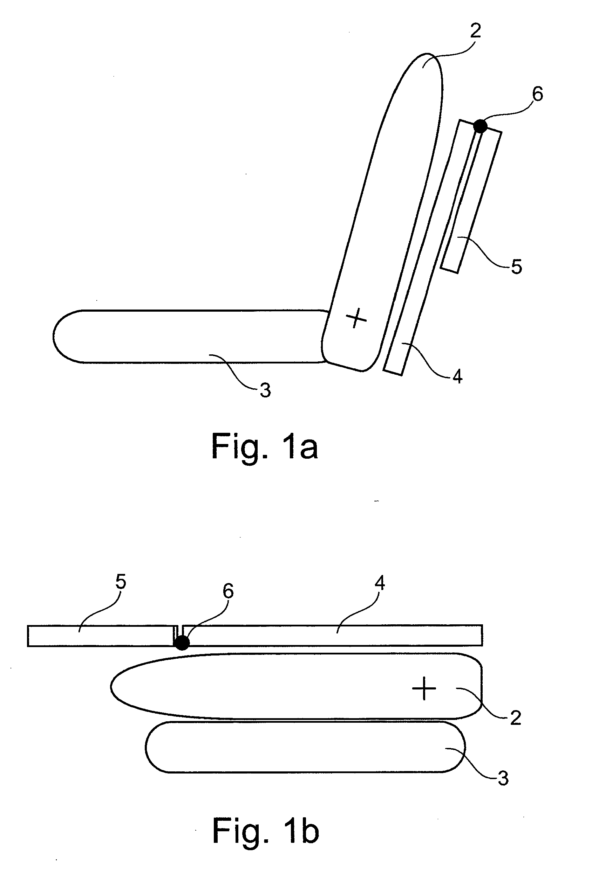

- la figure 1 est une vue latérale schématique d'un système dans son environnement dans laquelle le volet est en position escamotée, le dossier étant relevé en configuration d'utilisation (1a), et dans laquelle le volet est en position déployée, le dossier étant rabattu (1 b),
- la figure 2 est une vue schématique latérale agrandie du système de la figure 1 selon une réalisation, le volet étant en position escamotée (2a) et déployée (2b),
- la figure 3 est une vue latérale schématique d'un moyen de blocage selon une réalisation à l'état activé (3a) et désactivé (3b).

En référence aux figures, on décrit un système 1 de mise en plancher plat de véhicule automobile, ledit véhicule comprenant un siège pourvu d'un dossier 2 rabattable horizontalement contre l'assise 3 dudit siège, ledit système comprenant :
- une plaque 4 de recouvrement fixée en envers dudit dossier,
- un volet 5 articulé selon un axe 6 transversal en bordure supérieure de ladite plaque, ledit volet étant actionnable entre une position escamotée, où il est plaqué contre ladite plaque, et une position déployée, où il prolonge, notamment dans le même plan, ladite plaque au delà de ladite bordure, de manière à former lorsque ledit dossier est rabattu un plancher plan étendu formé par ledit volet et ladite plaque,
- un moyen de blocage 7 dudit volet en position escamotée,
- un moyen ressort 8 de déploiement dudit volet en position déployée lorsque ledit moyen de blocage est désactivé,
   ledit moyen ressort étant sous forme d'au moins une lame 9 - et selon une réalisation de deux lames 9 disposées symétriquement par rapport à un plan de symétrie vertical longitudinal dudit plancher - métallique élastiquement repliable formant charnière entre ladite plaque et ledit volet.

La lame 9 est associée à la plaque 4 et au volet 5 par exemple par collage, rivetage ou agrafage.

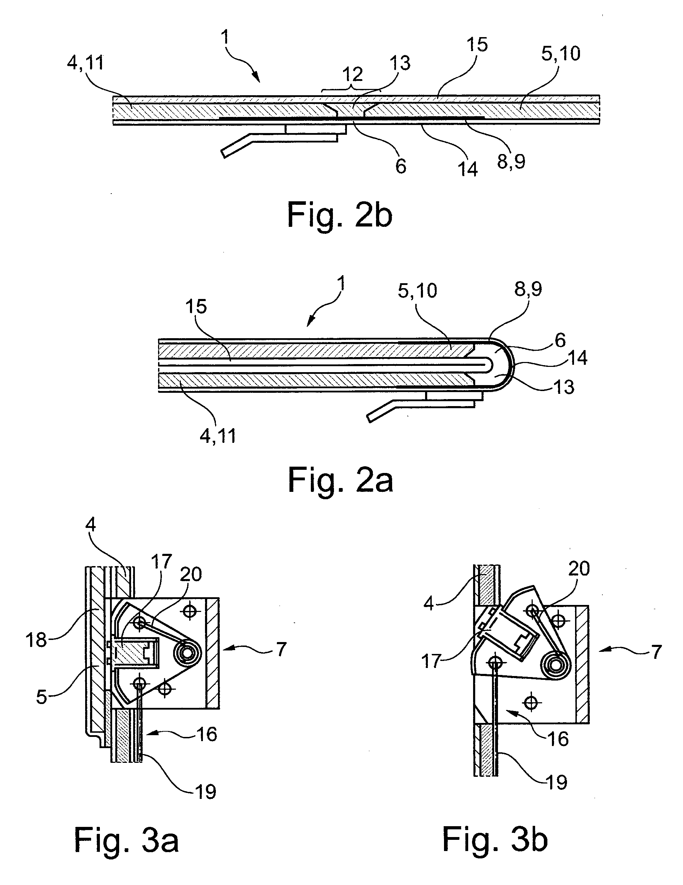

Selon la réalisation représentée en figure 2, le volet 5 et la plaque 4 comprennent chacun une âme 10,11 rigide reliées entre elles par au moins une lame 9 en ménageant un espace 12 de pliage, ledit espace étant rempli par un bloc 13 de matériau élastiquement compressible - notamment sous forme d'une mousse -, deux couches de matériau de revêtement 14,15 étant disposées de part et d'autre dudit bloc.

La couche 15 qui est visible lorsque le plancher est en situation d'utilisation s'étend notamment sur la totalité de la plaque 4 et du volet 5, ceci pour conférer une esthétique avantageuse audit plancher.

Selon une réalisation, le système 1 comprend en outre un moyen de désactivation 16 du moyen de blocage 7, ledit moyen de désactivation étant agencé pour être activé par rabattement du dossier 2.

Selon la réalisation de la figure 3, le moyen de blocage 7 comprend un élément magnétique - ici un aimant - monté sur la plaque 4, un élément magnétique réciproque 18 - ici sous forme de plaque métallique apte à être aimantée -étant fixé sur le volet 5.

L'élément magnétique 17 est ici monté en rotation, le moyen de désactivation 16 comprenant un câble 19 associé audit élément et monté de manière à se mettre en tension - respectivement se détendre - lors du rabattement du dossier 2 et à opérer une rotation dudit élément supprimant sa coopération avec l'élément réciproque 18, ledit élément magnétique étant solidaire d'un moyen ressort auxiliaire 20 exerçant une force tendant à le positionner de sorte qu'il puisse coopérer - respectivement ne puisse pas coopérer - avec ledit élément réciproque.

## Revendications

1. Système (1) de mise en plancher plat de véhicule automobile, ledit véhicule comprenant un siège pourvu d'un dossier (2) rabattable horizontalement contre l'assise (3) dudit siège, ledit système comprenant :
• une plaque (4) de recouvrement fixée en envers dudit dossier,
• un volet (5) articulé selon un axe (6) transversal en bordure supérieure de ladite plaque, ledit volet étant actionnable entre une position escamotée, où il est plaqué contre ladite plaque, et une position déployée, où il prolonge ladite plaque au delà de ladite bordure, de manière à former lorsque ledit dossier est rabattu un plancher plan étendu formé par ledit volet et ladite plaque,
• un moyen de blocage (7) dudit volet en position escamotée,
• un moyen ressort (8) de déploiement dudit volet en position déployée lorsque ledit moyen de blocage est désactivé,
ledit système étant **caractérisé en ce que** ledit moyen ressort est sous forme d'au moins une lame (9) métallique élastiquement repliable formant charnière entre ladite plaque et ledit volet.

2. Système selon la revendication 1, **caractérisé en ce que** le volet (5) et la plaque (4) comprennent chacun une âme (10,11) rigide reliées entre elles par au moins une lame (9) en ménageant un espace (12) de pliage, ledit espace étant rempli par un bloc (13) de matériau élastiquement compressible, deux couches (14,15) de matériau de revêtement étant disposées de part et d'autre dudit bloc.

3. Système selon la revendication 1 ou 2, **caractérisé en ce qu'**il comprend en outre un moyen de désactivation (16) du moyen de blocage (7), ledit moyen de désactivation étant agencé pour être activé par rabattement du dossier (2).

4. Système selon l'une quelconque des revendications 1 à 3, **caractérisé en ce que** le moyen de blocage (7) comprend un élément magnétique (17) monté sur la plaque (4), un élément magnétique réciproque (18) étant fixé sur le volet (5).

5. Système selon les revendications 3 et 4, **caractérisé en ce que** l'élément magnétique (17) est monté en rotation, le moyen de désactivation (16) comprenant un câble (19) associé audit élément et monté de manière à se mettre en tension - respectivement se détendre - lors du rabattement du dossier (2) et à opérer une rotation dudit élément supprimant sa coopération avec l'élément réciproque (18), ledit élément magnétique étant solidaire d'un moyen ressort auxiliaire (20) exerçant une force tendant à le positionner de sorte qu'il puisse coopérer - respectivement ne puisse pas coopérer - avec ledit élément réciproque.

## Patentansprüche

1. System (1) zum Einrichten eines flachen Bodens in einem Kraftfahrzeug, wobei das Fahrzeug einen Sitz umfasst, der mit einer Rücklehne (2) versehen ist, die waagerecht auf die Sitzfläche (3) des Sitzes umklappbar ist, wobei das System Folgendes umfasst:
- eine Abdeckplatte (4), die an der Rückseite der Rücklehne befestigt ist,
- eine Klappe (5), die entlang einer Querachse (6) am oberen Rand der Platte angelenkt ist, wobei die Klappe zwischen einer eingeklappten Position, in der sie an die Platte angedrückt ist, und einer ausgeklappten Position, in der sie die Platte über den Rand hinaus verlängert, betätigbar ist, um, wenn die Rücklehne umgeklappt ist, einen ausgedehnten ebenen Boden zu bilden, der durch die Klappe und die Platte gebildet wird,
- ein Mittel (7) zum Blockieren der Klappe in der eingeklappten Position,
- ein Federmittel (8) zum Aufklappen der Klappe in der aufgeklappten Position, wenn das Blockierungsmittel deaktiviert ist,
wobei das System **dadurch gekennzeichnet ist, dass** das Federmittel in Form mindestens eines metallischen Blatts (9) vorliegt, das elastisch umbiegbar ist und zwischen der Platte und der Klappe ein Scharnier bildet.

2. System nach Anspruch 1, **dadurch gekennzeichnet, dass** die Klappe (5) und die Platte (4) jeweils einen festen Kern (10, 11) umfassen, die miteinander über mindestens ein Blatt (9) verbunden sind und dabei einen Faltzwischenraum (12) einrichten, wobei dieser Zwischenraum mit einem Block (13) aus einem elastisch zusammendrückbaren Material ausgefüllt wird, wobei zwei Bezugsmaterialschichten (14, 15) auf beiden Seiten des Blocks angeordnet sind.

3. System nach Anspruch 1 oder 2, **dadurch gekennzeichnet, dass** es ferner ein Mittel (16) zum Deaktivieren (16) des Blockierungsmittels (7) umfasst, wobei das Mittel zum Deaktivieren angeordnet ist, um durch das Umklappen der Rücklehne (2) aktiviert zu werden.

4. System nach einem der Ansprüche 1 bis 3, **dadurch gekennzeichnet, dass** das Blockierungsmittel (7) ein Magnetelement (17) umfasst, das auf der Platte (4) montieret ist, wobei ein gegenseitiges Magnetelement (18) an der Klappe (5) befestigt ist.

5. System nach Anspruch 3 und 4, **dadurch gekennzeichnet, dass** das Magnetelement (17) drehbar gelagert ist, wobei das Deaktivierungsmittel (16) ein Kabel (19) umfasst, das mit dem Element verknüpft ist und derart montiert ist, dass es sich beim Umklappen der Rücklehne (2) spannt - bzw. sich lockert -, und um eine Drehung des Elements auszuführen, die sein Zusammenwirken mit dem gegenseitigen Element (18) aufhebt, wobei das Magnetelement mit einem Hilfsfedermittel (20) fest verbunden ist, das eine Kraft ausübt, die dazu neigt, dieses derart zu positionieren, dass es mit dem gegenseitigen Element zusammenwirken - bzw. nicht zusammenwirken - kann.

## Claims

1. System (1) for forming a flat platform in a motor vehicle, said vehicle comprising a seat comprising a backrest (2) that can be folded horizontally against the squab (3) of said seat, said system comprising:
- a covering plate (4) fixed on the back of said backrest,
- a flap (5) articulated on a transverse axis (6) at the top edge of said plate, said flap being able to be actuated between a retracted position, where it is pressed against said plate, and a deployed position, where it extends said plate beyond said edge, so as to form, when said backrest is folded, an extended flat platform formed by said flap and said plate,
- a means (7) for locking said flap in the retracted position,
- a spring means (8) for deployment of said flap in the deployed position when said locking means is deactivated, said system being **characterised in that** said spring means is in the form of at least one elastically foldable metal blade (9) forming a hinge between said plate and said flap.

2. System according to claim 1, **characterised in that** the flap (5) and the plate (4) each comprise a rigid web (10, 11) connected together by at least one blade (9), forming a folding space (12), said space being filled by a block (13) of elastically compressible material, two layers (14, 15) of cladding material being disposed on either side of said block.

3. System according to claim 1 or 2, **characterised in that** it also comprises a means (16) of deactivating the locking means (7), said deactivation means being arranged to be activated by folding the backrest (2).

4. System according to any one of claims 1 to 3, **characterised in that** the locking means (7) comprises a magnetic element (17) mounted on the plate (4), a reciprocal magnetic element (18) being fixed on the flap (5).

5. System according to claims 3 and 4, **characterised in that** the magnetic element (17) is mounted in rotation, the deactivation means (16) comprising a cable (19) associated with said element and mounted so as to become tensioned - respectively relaxed - when the backrest (2) is folded and to effect a rotation of said element eliminating its cooperation with the reciprocal element (18), said magnetic element being fixed to an auxiliary spring means (20) exerting a force tending to position it so that it can cooperate - respectively cannot cooperate - with said reciprocal element.
